# EUROPÄISCHE PATENTSCHRIFT

(11) **EP 3 782 829 B1**
(45) Veröffentlichungstag und Bekanntmachung des Hinweises auf die Patenterteilung: **20.10.2021**
(21) Anmeldenummer: 20169857.8
(22) Anmeldetag: 16.04.2020
(51) Int. Cl.: B60D 1/46, B60D 1/06

(54) **SPERRMECHANISMUS FÜR EINE KUGELKUPPLUNG**
LOCKING DEVICE FOR A BALL CLUTCH
MÉCANISME DE VERROUILLAGE POUR UN EMBRAYAGE À BILLE

(30) Priorität: 21.08.2019 DE 202019104589 U
(43) Veröffentlichungstag der Anmeldung: 24.02.2021
(73) Patentinhaber: Hans Sauermann GmbH & Co. KG, 86558 Freinhausen (DE)
(72) Erfinder: SAUERMANN, Franz, 86558 Freinhausen (DE)
(74) Vertreter: TBK

(56) Entgegenhaltungen:
- EP-A1- 0 298 073
- EP-A1- 1 688 277
- DE-U1-202004 013 346
- DE-U1-202014 009 525
- US-A1- 2012 217 724
- US-A1- 2016 243 909

## Beschreibung

### Technisches Gebiet

Die vorliegende Erfindung betrifft einen Sperrmechanismus für eine Kugelkupplung, der eine Verschiebung der Kugelkupplung entlang einer Achse sperren kann.

### Stand der Technik

Herkömmlicherweise sind Kugelkupplungen weit verbreitet, die beispielsweise zum Koppeln eines Anhängers an ein Fahrzeug verwendet werden. Ein Kugelkopf und eine Kugelpfanne ermöglichen ein Schwenken des gezogenen Anhängers um drei Schwenkachsen und sperren gleichzeitig ein Verschieben der Kugelpfanne relativ zu dem Kugelkopf und somit dem Fahrzeug. Dadurch nimmt die Kugelkupplung während einer Fahrt die gesamte Längskraft in der Fahrtrichtung auf, mit der das Fahrzeug den Anhänger zieht. Zudem kann es erforderlich sein, beim Bremsen des Anhängers Längskräfte aufzunehmen, um eine Bremskraft zu erzeugen oder eine von dem Anhänger erzeugte Bremskraft zu unterstützen.

Im Allgemeinen ist es erforderlich, ein Verschieben des Kugelkopfs relativ zu dem Fahrzeug während der Fahrt zu verhindern, damit Kräfte zwischen Fahrzeug und Anhänger übertragen werden können. Andererseits wird die erforderliche Anbringungshöhe der Kugelkupplung von der Bauart des Anhängers sowie der Beladung des Fahrzeugs und des Anhängers beeinflusst, daher kann es zwischen Fahrten erforderlich sein, eine Höhe anzupassen, auf der die Kugelkupplung angebracht ist.

Zur Anpassung der Höhe ist üblicherweise ein Verstellmechanismus vorgesehen, der eine manuelle Verstellung auf das erforderliche Maß ermöglicht. Dabei weist der Verstellmechanismus im Allgemeinen eine verschiebliche Lagerung der Kugelkupplung in Kombination mit einem Sperrmechanismus auf, der das Verschieben der Kugelkupplung nach der Verstellung sperrt und die Kugelkupplung somit verriegelt. Der Sperrmechanismus muss daher die Kräfte während der Fahrt zuverlässig aufnehmen und dabei ein Entriegeln ausschließen, um die Sicherheit zu gewährleisten. Aufgrund dieser vielfältigen Anforderungen sind herkömmliche Verstellmechanismen aufwendig in der Handhabung, erfordern hohe Kräfte zum Entriegeln und zur Verstellung, und weisen einen hohen Platzbedarf auf.

EP 1 688 277 A1 zeigt einen herkömmlichen Verstellmechanismus gemäß dem Oberbegriff des Patentanspruchs 1 der vorliegenden Erfindung. Weitere herkömmliche Verstellmechanismen sind in DE 20 2014 009525 U1, DE 20 2004 013346 U1, US 2016/243909 A1 und US 2012/217724 A1 gezeigt.

Im Hinblick auf diese Umstände ist es eine Aufgabe der vorliegenden Erfindung, einen Sperrmechanismus für eine verstellbare Kugelkupplung bereitzustellen, der mit einem kompakten Aufbau das Verriegeln ermöglicht.

Weitere Ziele der Erfindung sind eine einfache Handhabung durch einen Benutzer, ein zuverlässiges Herbeiführen und Beibehalten des verriegelten Zustands, eine zuverlässige Aufnahme der während der Fahrt wirkenden Kräfte sowie einen einfachen und kostengünstigen Aufbau.

### Kurze Beschreibung der Erfindung

Erfindungsgemäß wird die Aufgabe des kompakten Aufbaus durch einen nachfolgend beschriebenen Sperrmechanismus für eine Kugelkupplung gelöst, die an einem mit zwei Führungsnuten versehenen Fahrzeug anbringbar ist. Der Sperrmechanismus hat einen Hauptkörper mit zwei parallelen Führungsflächen, die in die zwei parallelen Führungsnuten einsetzbar sind, um darin entlang einer Verstellachse verschieblich zu sein; einen Verriegelungsbolzen, der relativ zu dem Hauptkörper entlang einer Bolzenlängsachse verschieblich ist, wobei der Verriegelungsbolzen in eine Verriegelungsöffnung, die in der einen Führungsnut bereitgestellt ist, einsetzbar ist, sodass er eine Relativbewegung in Richtung der Verstellachse zwischen der einen Führungsnut und der entsprechenden einen Führungsfläche verhindert; einen Steuerungskörper, der um eine Drehachse drehbar ist und derart mit dem Verriegelungsbolzen gekoppelt ist, dass eine Drehung des Steuerungskörpers eine Verschiebung des Verriegelungsbolzens bewirkt; und einen Handgriff, der an dem Steuerungskörper bereitgestellt ist und in einer zu einer Seitenfläche des Steuerungskörpers parallelen Ebene zwischen einer Ausgangsposition und einer Freigabeposition verschieblich ist. Der Steuerungskörper ist zwischen einer verriegelten Stellung, in der der Verriegelungsbolzen in der Verriegelungsöffnung eingesetzt ist, und einer entriegelten Stellung drehbar, in der der Verriegelungsbolzen nicht in der Verriegelungsöffnung eingesetzt ist. Erfindungsgemäß verhindert der Handgriff in der Ausgangsposition die Drehung des Steuerungskörpers, und ermöglicht in der Freigabeposition die Drehung des Steuerungskörpers.

Durch das Bereitstellen des Handgriffs in einer Ebene, die parallel zu einer Seitenfläche des Steuerungskörpers liegt, wird der Platzbedarf des Sperrmechanismus minimiert. Das Einsetzen des Verriegelungsbolzens in die Verriegelungsöffnung verhindert auf wirksame Weise das Verschieben des Hauptkörpers und somit eine unbeabsichtigte Verstellung. Indem der Handgriff an dem Steuerungskörper bereitgestellt ist, um diesen drehen zu können, und die Drehbewegung des Steuerungskörpers zwischen der entriegelten Stellung und der verriegelten Stellung die Verschiebung des Verriegelungsbolzens steuert, kann eine Betätigung des Handgriffs durch den Benutzer die Verstellung des Hauptkörpers ermöglichen oder verhindern. Dadurch wird die Handhabung vereinfacht.

Indem die Position des Handgriffs eine Drehung des Steuerungskörpers ermöglicht oder verhindert, kann der Steuerungskörper gesperrt oder freigegeben werden. Dadurch kann die verriegelte Stellung zuverlässig beibehalten werden. Der Handgriff ermöglicht zudem sowohl das Sperren und Freigeben des Steuerungskörpers als auch die Drehung des Steuerungskörpers, wodurch eine einfache, einhändige Handhabung ermöglicht wird.

Vorzugsweise hat der Sperrmechanismus ferner eine Handgriffrückstellfeder, die den Handgriff durch eine Federkraft zu der Ausgangsposition drängt.

Durch die Handgriffrückstellfeder wird das Sperren des Steuerungskörpers bei Loslassen des Handgriffs herbeigeführt, wodurch die Sicherheit verbessert wird. Zudem wird die Handhabung weiter vereinfacht, da keine Kraft zum Sperren des Steuerungskörpers aufgewendet werden muss.

Vorzugsweise hat der Sperrmechanismus ferner eine Kulissennut, die in einer zu einer Seitenfläche des Steuerungskörpers parallelen Ebene bereitgestellt ist, und einen Führungszapfen, der in die Kulissennut eingreift und durch diese geführt wird. Die Kulissennut hat einen ersten Abschnitt, der sich so erstreckt, dass er in der verriegelten Stellung die Bewegung des Führungszapfens von der Ausgangsposition zu der Freigabeposition des Handgriffs führt, und einen zweiten Abschnitt, der die Bewegung des Führungszapfens von der Freigabeposition mit der Drehung des Steuerungskörpers von dessen verriegelten Stellung zu dessen entriegelten Stellung führt.

Durch diesen Aufbau wird die durch den Benutzer auszuführende Bewegung des Handgriffs von der Ausgangsposition zu der Freigabeposition sowie die Bewegung des Steuerungskörpers von der verriegelten Stellung zu der entriegelten Stellung auf vorgegebene Weise geführt. Demgemäß wird die Handhabung weiter vereinfacht. Zudem kann der erste Abschnitt der Kulissennut eine Drehung des Steuerungskörpers auch dann verhindern, wenn der Handgriff seine Ausgangsposition verlassen hat, jedoch die Freigabeposition noch nicht erreicht hat. Dadurch wird ein unerwünschtes Freigeben des Steuerungskörpers weniger wahrscheinlich, wodurch die Sicherheit weiter verbessert wird.

Vorzugsweise erstreckt sich der erste Abschnitt mit Bezug auf die Drehachse radial, und der zweite Abschnitt erstreckt sich kreisbogenförmig und hat die Drehachse als Mittelpunkt.

Ein derartiger Aufbau liegt beispielsweise dann vor, wenn sich eine Achse, entlang welcher der Handgriff verschoben wird, und die Drehachse des Steuerungskörpers kreuzen. In einem solchen Fall wird der Handgriff quer zu der Drehachse betätigt und in einer Ebene um dieselbe Drehachse gedreht, wodurch die Handhabung für den Benutzer natürlicher und somit einfacher wird. Ferner wird durch die geradlinige und/oder kreisbogenförmige Erstreckung der Führungsnut eine einfache und kostengünstige Fertigung ermöglicht.

Vorzugsweise hat die Kulissennut ferner einen dritten Abschnitt, der sich so erstreckt, dass er in der entriegelten Stellung die Bewegung des Führungszapfens von der Freigabeposition zu der Ausgangsposition des Handgriffs führt.

Durch diesen Aufbau kann der Steuerungskörper auch in seiner entriegelten Stellung gesperrt werden, wodurch die Verstellung der Kugelkupplung ohne Betätigung des Handgriffs ermöglicht wird. Dadurch wird die Handhabung weiter verbessert.

Vorzugsweise ist die Kulissennut in dem Hauptkörper und der Führungszapfen an dem Handgriff bereitgestellt.

Dadurch wird ein einfacher Aufbau ermöglicht.

Vorzugsweise hat der Sperrmechanismus ferner einen weiteren Verriegelungsbolzen, der relativ zu dem Hauptkörper entlang einer weiteren Bolzenlängsachse verschieblich ist, die eine zu der Verstellachse senkrechten Achse ist. Der weitere Verriegelungsbolzen ist in eine weitere Verriegelungsöffnung einsetzbar, die in der anderen Führungsnut bereitgestellt ist, sodass er eine Relativbewegung in Richtung der Verstellachse zwischen der anderen Führungsnut und der entsprechenden anderen Führungsfläche verhindert. Der Steuerungskörper ist derart mit dem weiteren Verriegelungsbolzen gekoppelt, dass eine Drehung des Steuerungskörpers eine Verschiebung des weiteren Verriegelungsbolzens bewirkt. Der weitere Verriegelungsbolzen ist in der verriegelten Stellung des Steuerungskörpers in der Verriegelungsöffnung eingesetzt, und in der entriegelten Stellung des Steuerungskörpers nicht in der Verriegelungsöffnung eingesetzt.

Durch das Bereitstellen eines weiteren Verriegelungsbolzens wird die Belastbarkeit der Verbindung zwischen Fahrzeug und Hauptkörper verbessert.

Somit wird die Kraftaufnahme während der Fahrt verbessert, wodurch auch eine weitere Verbesserung der Sicherheit erreicht wird.

Vorzugsweise hat der Sperrmechanismus ferner einen Koppelhebel, der die Drehung des Steuerungskörpers in eine Verschiebung eines Verriegelungsbolzens um die dazugehörige Bolzenlängsachse umwandelt. Der Verriegelungsbolzen ist durch den Koppelhebel mit dem Steuerungskörper verbunden.

Dadurch wird ein einfacher Aufbau ermöglicht.

Vorzugsweise hat der Sperrmechanismus ferner eine Koppelhebelfeder, die den Koppelhebel mit dem Hauptkörper verbindet und den Koppelhebel in eine Richtung drängt, die einer Drehrichtung des Steuerungskörpers zu der verriegelten Stellung entspricht.

Somit wird eine Zurückstellung des Steuerungskörpers auf seine verriegelte Stellung erzielt, wodurch es nicht erforderlich ist, dass der Benutzer den Steuerungskörper manuell zu der verriegelten Stellung dreht. Demgemäß werden die Sicherheit und die Handhabung weiter verbessert.

Eine Totpunktstellung ist als eine Stellung des Steuerungskörpers definiert, bei der ein Abstand zwischen einem Verriegelungsbolzen und der Drehachse maximal ist. Die Totpunktstellung liegt vorzugsweise zwischen der entriegelten Stellung des Steuerungskörpers und der verriegelten Stellung des Steuerungskörpers.

Durch diesen Aufbau drängen Kräfte, die auf den Verriegelungsbolzen wirken, den Steuerungskörper entweder zu der Totpunktstellung oder zu der verriegelten Stellung. Jedoch ist der Verriegelungsbolzen sowohl bei der Totpunktstellung als auch in der verriegelten Stellung in der Verriegelungsöffnung eingesetzt. Somit können die auf den Verriegelungsbolzen einwirkenden Kräfte die Verriegelung nicht lösen. Demgemäß wird die Zuverlässigkeit der Kraftaufnahme während der Fahrt verbessert, und ein unbeabsichtigtes Entriegeln ohne Betätigung des Handgriffs wird vermieden.

Vorzugsweise ist die Drehachse senkrecht zu der Verstellachse und zu einer Bolzenlängsachse angeordnet.

Durch diesen Aufbau liegt der Steuerungskörper sowie der durch den Steuerungskörper benötigten Freigang zur Verstellung parallel zu einer Ebene, die die Bolzenlängsachse und die Verstellachse enthält. Demgemäß wird eine weitere Reduktion des Platzbedarfes erreicht.

Vorzugsweise bringt der Hauptkörper den Steuerungskörper und den/die Verriegelungsbolzen staubgeschützt unter.

Durch diesen Aufbau wird eine Beeinträchtigung durch Staubeintritt in die bewegten Teile des Sperrmechanismus vermieden. Demgemäß wird die Sicherheit weiter verbessert.

### Kurzbeschreibung der Zeichnungen

Figur 1 ist eine perspektivische Ansicht, die einen Sperrmechanismus für eine Kugelkupplung gemäß einem bevorzugten Ausführungsbeispiel zeigt, wobei ein Steuerungskörper in einer verriegelten Stellung ist.
Figur 2 ist eine perspektivische Ansicht, die den Sperrmechanismus gemäß dem bevorzugten Ausführungsbeispiel zeigt, wobei der Steuerungskörper in einer entriegelten Stellung ist.
Figur 3 ist eine Vorderansicht, die den Sperrmechanismus gemäß dem bevorzugten Ausführungsbeispiel zeigt, wobei der Steuerungskörper in der verriegelten Stellung ist.
Figur 4 ist eine Schnittansicht entlang der Linie IV-IV in Figur 3, die einen Ausschnitt in dem Bereich einer Kulisse und einer Handgriffrückstellfeder gemäß dem bevorzugten Ausführungsbeispiel zeigt.

### Beschreibung des bevorzugten Ausführungsbeispiels

Der konstruktive Aufbau des erfindungsgemäßen Sperrmechanismus 1 wird zunächst unter Bezugnahme auf die beiliegenden Figuren erklärt.

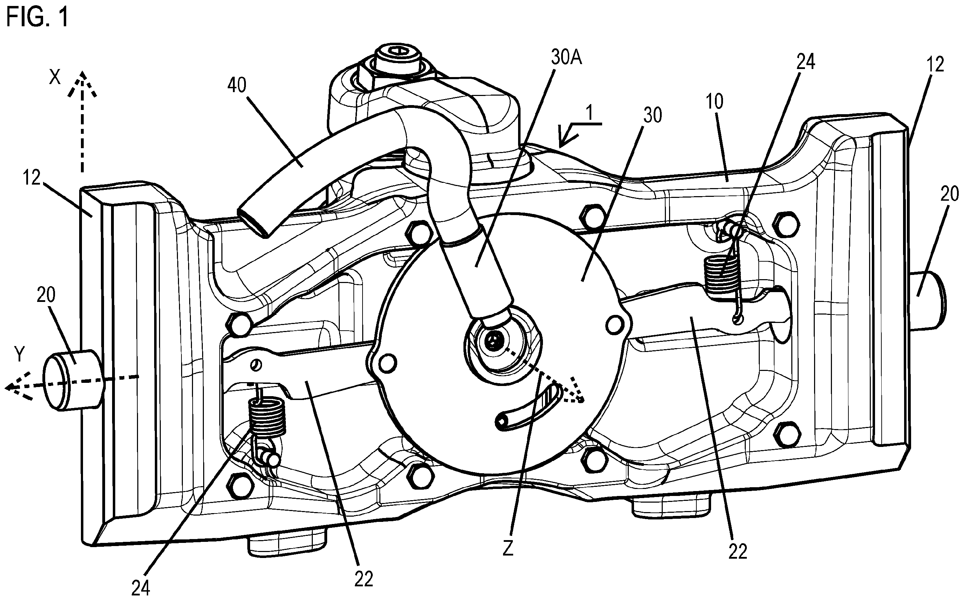

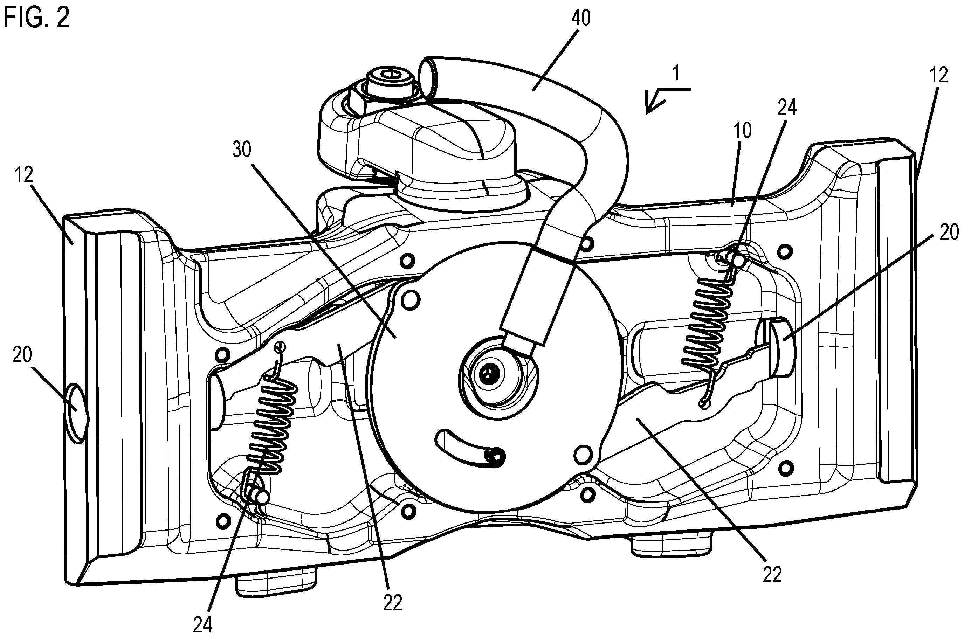

Figuren 1 und 2 zeigen einen Sperrmechanismus 1 gemäß dem bevorzugten Ausführungsbeispiel. Figur 1 zeigt den Sperrmechanismus 1 in einer verriegelten Stellung, Figur 2 zeigt den Sperrmechanismus 1 in einer entriegelten Stellung. Die vorgenannten Stellungen werden später beschrieben.

Der Sperrmechanismus 1 gemäß dem Ausführungsbeispiel weist einen Hauptkörper 10 auf, der in seinem Inneren einen Hohlraum hat, in dem weitere später beschriebene Bauteile staubgeschützt untergebracht sind. Der Hauptkörper 10 ist bevorzugt aus einem metallischen Werkstoff, beispielsweise Stahl, Gusseisen oder Aluminium (nachfolgend werden derartige Werkstoffe vereinfachend als "Metall" bezeichnet), ausgebildet. Die Fertigung des Hauptkörpers 10 erfolgt vorzugsweise durch Gießen, alternativ durch eine spanende Bearbeitung oder unter Verwendung eines additiven Fertigungsverfahrens. Ein nicht dargestellter Deckel ist an einer Seitenfläche des Hauptkörpers 10 vorgesehen, um den Hohlraum staubgeschützt abzuschließen.

Ferner sind bei dem bevorzugten Ausführungsbeispiel an dem Hauptkörper 10 zwei Führungsflächen 12 bereitgestellt, die auf entgegengesetzten Seiten des Hauptkörpers 10 parallel zueinander verlaufen. Die Führungsflächen 12 können in Führungsnuten eingesetzt werden, die beispielsweise an einem Fahrzeug bereitgestellt sind. Benachbart zu jeder Führungsfläche 12 ist bei dem Ausführungsbeispiel eine zweite Fläche ausgebildet, die nicht parallel zu der Führungsfläche 12 ist, wobei zwischen der Führungsfläche 12 und der zweiten Fläche eine Fase bereitgestellt ist. Die Führungsfläche 12 und die benachbarte zweite Fläche sind Teil eines Führungsabschnitts, der eine Führungsnut kontaktiert. Dadurch kann der gesamte Hauptkörper 10 in einer Richtung einer Achse verschieblich sein, die als Verstellachse X bezeichnet wird und in Figur 1 durch einen gestrichelten Pfeil dargestellt ist. Das Verschieben des Hauptkörpers 10 entlang der Verstellachse X wird auch als "Verstellung" bezeichnet. Zudem nehmen die benachbarten zweiten Flächen mindestens einen Teil der während der Fahrt auftretenden Längskräfte auf, wodurch die Sicherheit verbessert wird. Alternativ können die Führungsflächen 12 und die Führungsnuten als ebene Flächen ohne zweite Flächen ausgebildet sein, sodass der Hauptkörper 10 entlang einer Verstellebene um zwei Verstellachsen verschieblich ist. In einem solchen Fall tragen die Führungsflächen 12 nicht zur Längskraftaufnahme während der Fahrt bei.

Ferner weist der Sperrmechanismus 1 mindestens einen Verriegelungsbolzen 20 auf, der entlang seiner Längsachse (auch als "Bolzenlängsachse Y" bezeichnet) verschieblich ist. Eine Bolzenlängsachse Y ist in Figur 1 durch einen gestrichelten Pfeil dargestellt. Bei dem Ausführungsbeispiel sind zwei zylindrische Verriegelungsbolzen 20 aus Metall an den entgegengesetzten Führungsflächen 12 bereitgestellt, wobei die Bolzenlängsachsen auf einer gemeinsamen Achse liegen und die Verriegelungsbolzen 20 somit entlang der gemeinsamen Achse verschieblich sind. Alternativ können die Verriegelungsbolzen 20 eine andere Form als die zylindrische Form haben, entlang unterschiedlicher Achsen verschieblich sein, an einer beliebigen der zwei Führungsflächen 12 bereitgestellt sein, und in einer Anzahl von einem oder drei oder mehr Verriegelungsbolzen 20 bereitgestellt sein.

Ferner weist der Sperrmechanismus 1 einen Steuerungskörper 30 auf, um die Verriegelungsbolzen 20 entlang ihrer Längsachsen verschieben zu können und dieses Verschieben zu steuern. Der Steuerungskörper 30 ist um eine Drehachse Z drehbar mit dem Hauptkörper 10 verbunden und mit den Verriegelungsbolzen 20 gekoppelt, sodass eine Drehung des Steuerungskörpers 30 eine Verschiebung der Verriegelungsbolzen 20 bewirkt. Die Drehachse Z ist durch einen gestrichelten Pfeil in Figur 1 dargestellt. Bei dem Ausführungsbeispiel ist der Steuerungskörper 30 aus Metall ausgebildet und hat eine dünne Scheibenform. Alternativ kann der Steuerungskörper 30 aus einem Kunststoff oder einem anderen Material mit ausreichender Festigkeit ausgebildet sein und eine beliebige Form aufweisen, die die Drehachse Z mit einem oder mehreren später beschriebenen Kopplungspunkten 22B verbindet.

Bei dem Ausführungsbeispiel ist die Drehachse Z senkrecht zu der Verstellachse X und zu der Bolzenlängsachse Y angeordnet. Dadurch ist der dünne, scheibenförmige Steuerungskörper 30 parallel zu einer Ebene ausgerichtet, die durch die Verstellachse X und die Bolzenlängsachse Y definiert ist. Somit wird ein kompakter Aufbau ermöglicht. Alternativ kann der Steuerungskörper 30 geneigt mit Bezug auf diese Ebene sein, um an den für einen Einbau verfügbaren Platz angepasst zu sein.

Der Steuerungskörper 30 ist zwischen einer in Figur 1 gezeigten verriegelten Stellung und einer in Figur 2 gezeigten entriegelten Stellung drehbar.

Wie in Figur 1 gezeigt ist, ragen die Verriegelungsbolzen 20 in der verriegelten Stellung über die Führungsflächen 12 hinaus. Dadurch können die Verriegelungsbolzen 20 in entsprechende Verriegelungsöffnungen eingesetzt sein, die in den entsprechenden Führungsnuten bereitgestellt sind. Durch das Einsetzen eines Verriegelungsbolzens 20 in eine Verriegelungsöffnung wird eine Relativbewegung zwischen der entsprechenden Führungsfläche 12 und der dazugehörigen Führungsnut verhindert. Demgemäß verhindert das Einsetzen eines Verriegelungsbolzens 20 die Verschiebung des Hauptkörpers 10 entlang der Verstellachse X. Ein Verhindern der Verschiebung des Hauptkörpers 10 entlang der Verstellachse X wird auch als "Verriegeln" bezeichnet. Da bei dem Ausführungsbeispiel an beiden Führungsflächen 12 je ein Verriegelungsbolzen 20 bereitgestellt ist und die zwei Verriegelungsbolzen 20 gleichzeitig in Verriegelungsöffnungen eingesetzt sind, wird das Verriegeln zuverlässiger gewährleistet. Zudem nehmen die eingesetzten Verriegelungsbolzen 20 einen Teil der während der Fahrt auftretenden Kräfte auf, somit verbessert das Bereitstellen von zwei oder mehr Verriegelungsbolzen 20 die Sicherheit.

Wie in Figur 2 gezeigt ist, ragen die Verriegelungsbolzen 20 in der entriegelten Stellung nicht über die Führungsflächen 12 hinaus, sondern sind vollständig in dieser versenkt. Dadurch werden die Verriegelungsbolzen 20 aus den entsprechenden Verriegelungsöffnungen zurückgezogen und sind nicht in diesen eingesetzt. Somit wird eine Relativbewegung zwischen der entsprechenden Führungsfläche 12 und der dazugehörigen Führungsnut nicht verhindert, und die Verschiebung des Hauptkörpers 10 entlang der Verstellachse X wird ermöglicht. Ein Ermöglichen der Verschiebung des Hauptkörpers 10 entlang der Verstellachse X wird auch als "Entriegeln" bezeichnet.

Zur Kopplung der Drehbewegung des Steuerungskörpers 30 mit der Verschiebung der zwei Verriegelungsbolzen 20 sind bei dem Ausführungsbeispiel zwei Koppelhebel 22 vorgesehen. Jeder Koppelhebel 22 ist an einem Kopplungspunkt 22B an dem Steuerungskörper 30 und an einem Kopplungspunkt 22A an einem der Verriegelungsbolzen 20 drehbar gelagert, daher entspricht die Anzahl der Koppelhebel 22 der Anzahl der Verriegelungsbolzen 20. Somit ist jeder Verriegelungsbolzen 20 durch den Koppelhebel 22 mit dem Steuerungskörper 30 verbunden, und eine Drehung des Steuerungskörpers 30 führt zu einer Verschiebung aller Verriegelungsbolzen 20. Die Koppelhebel sind aus Metall ausgebildet. Jedoch kann statt der Koppelhebel 22 eine andere dem Fachmann geläufige Art der Kopplung zwischen einer Drehbewegung und einer Verschiebung bereitgestellt sein, beispielsweise einen Seilzug, eine Zahnstange oder dergleichen.

Ein Handgriff 40 ist an dem Steuerungskörper 30 bereitgestellt. Der Handgriff 40 ist parallel zu einer Seitenfläche des Steuerungskörpers 30 angeordnet und in einer zu einer Seitenfläche des Steuerungskörpers 30 parallelen Ebene zwischen einer Ausgangsposition und einer Freigabeposition verschieblich. Bei dem Ausführungsbeispiel hat der Handgriff 40 im Wesentlichen die Form von zwei Zylindern, die zueinander angewinkelt sind, wobei sich der eine Zylinder im Wesentlichen radial von der Drehachse Z erstreckt und sich der andere Zylinder im Wesentlichen senkrecht zu dem einen Zylinder erstreckt. Der eine Zylinder dient zur Lagerung des Handgriffs 40, wobei dieser entlang der Zylinderachse verschieblich ist. Der andere Zylinder dient zum Ergreifen und Betätigen durch den Benutzer, wodurch dieser den Handgriff 40 zwischen der Ausgangsposition und der Freigabeposition verschieben kann. Jedoch sind beliebige dem Fachmann geläufige Gestaltungen des Handgriffs 40 denkbar, bei welchen der Benutzer den Handgriff 40 zwischen zwei Positionen verschieben kann. Bei dem Ausführungsbeispiel ist der Handgriff 40 aus Metall ausgebildet, jedoch kann er aus einem anderen Werkstoff oder einem Werkstoffverbund ausgebildet sein, solange eine ausreichende Festigkeit und eine komfortable Handhabung für den Benutzer gewährleistet sind.

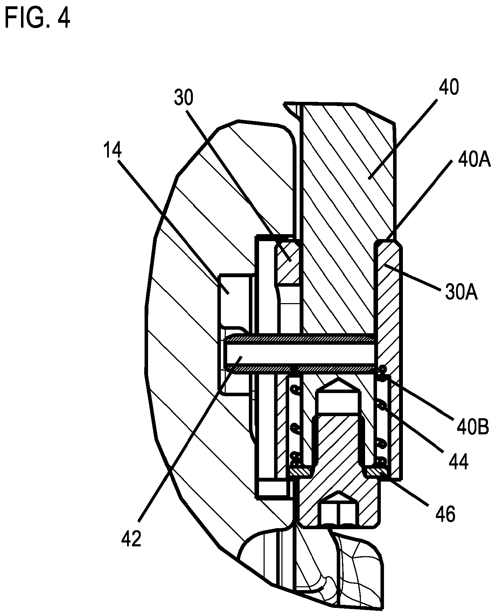

Wie in Figur 4 gezeigt ist, ist der Handgriff 40 in einem Hülsenabschnitt 30A eingesetzt, der an der Seitenfläche des Steuerungskörpers 30 ausgebildet ist. Der Hülsenabschnitt 30A ist bei dem Ausführungsbeispiel als eine Hülse (einen Hohlzylinder) aus Metall ausgeführt, die an der Seitenfläche des Steuerungskörper 30 angeschweißt ist, jedoch kann der Hülsenabschnitt 30A auch einstückig mit dem Steuerungskörper 30 ausgebildet sein und eine nicht zylindrische Form aufweisen. Ein Innendurchmesser des Hülsenabschnitts 30A entspricht im Wesentlichen einem Außendurchmesser des einen Zylinders des Handgriffs 40 in diesem Bereich. Der Hülsenabschnitt 30A hat ein von der Drehachse Z fernes Ende (oberes Ende in Figur 4), an dem eine Anschlagfläche 40A des Handgriffs 40 anliegt und dadurch die Ausgangsposition des Handgriffs 40 definiert. Zudem hat der Hülsenabschnitt 30A eine Aussparung, die in einem der Drehachse Z nahen Ende des Hülsenabschnitts 30A (unteres Ende in Figur 4) ausgebildet ist und einen größeren Durchmesser hat als der Außendurchmesser des Handgriffs in diesem Bereich. Die Aussparung ist bei dem Ausführungsbeispiel durch Plansenken ausgebildet und hat eine zylindrische Form mit einer ebenen Bodenfläche, die als eine Anlagefläche 40B dient, jedoch kann die Aussparung eine beliebige Form haben, die einen Hohlraum zwischen dem einen Zylinder des Handgriffs 40 und der Innenfläche des Hülsenabschnitts 30A ausbildet.

Der Handgriff 40 dreht sich gemeinsam mit dem Steuerungskörper 30 um die Drehachse Z und dient dazu, die Drehung des Steuerungskörpers 30 zu bewirken. Dadurch kann der Benutzer auf einfache Weise den Steuerungskörper 30 zwischen der verriegelten Stellung und der entriegelten Stellung drehen. Somit kann eine Betätigung des Handgriffs 40 durch den Benutzer die Verstellung des Hauptkörpers 10 ermöglichen oder verhindern (den Hauptkörper 10 verriegeln oder entriegeln), wodurch die Handhabung vereinfacht wird.

Zudem verhindert der Handgriff 40 bei dem Ausführungsbeispiel in seiner Ausgangsposition die Drehung des Steuerungskörpers 30; dies wird auch als "Sperren des Steuerungskörpers 30" bezeichnet. Dadurch kann die verriegelte Stellung zuverlässig beibehalten werden. Darüber hinaus ermöglicht bei dem Ausführungsbeispiel der Handgriff 40 in seiner Freigabeposition die Drehung des Steuerungskörpers 30; dies wird auch als "Freigeben des Steuerungskörpers 30" bezeichnet. Demgemäß steuert der Handgriff 40 sowohl das Sperren und Freigeben des Steuerungskörpers 30 als auch die Drehung des Steuerungskörpers 30 zum Verriegeln und Entriegeln, wodurch beide Betätigungen durch den Benutzer ohne Umgreifen oder dergleichen erfolgen können und eine einfache, einhändige Handhabung ermöglicht wird. Zudem erfolgen beide Betätigungen zum Sperren/Freigeben und Verriegeln/Entriegeln in einer Ebene, wodurch die Handhabung für den Benutzer natürlicher und noch einfacher wird.

Bei dem Ausführungsbeispiel hat der Sperrmechanismus 1 ferner eine Handgriffrückstellfeder 44, die in der Schnittansicht von Figur 4 gezeigt ist. Die Handgriffrückstellfeder 44 ist bei dem Ausführungsbeispiel als Druckfeder ausgeführt und in der zuvor beschriebenen Aussparung in dem Hülsenabschnitt 30A des Steuerungskörpers 30 aufgenommen. Auf der Seite des Handgriffs 40 liegt ein Ende der Handgriffrückstellfeder 44 an der Anlagefläche 40B und somit an dem Steuerungskörper 30 an. Das andere Ende der Handgriffrückstellfeder 44 liegt an einer Scheibe 46 an, die an einem der Drehachse Z nahen Ende des einen Zylinders des Handgriffs 40 bereitgestellt und daran befestigt ist (mit diesem verschraubt ist). Die Handgriffrückstellfeder 44 drängt daher den Handgriff 40 durch ihre Federkraft stets in Richtung zu der Ausgangsposition. Dadurch wird gewährleistet, dass der Handgriff 40 ohne Krafteinwirkung durch den Benutzer zu der Ausgangsposition zurückgestellt wird. Demgemäß wird der Steuerungskörper 30 in der verriegelten Stellung bei Loslassen des Handgriffs 40 gesperrt, wodurch die Sicherheit verbessert wird. Zudem wird die Handhabung weiter vereinfacht, da keine Kraft zum Sperren des Steuerungskörpers 30 aufgewendet werden muss.

Jeder Koppelhebel 22 ist zudem bei dem Ausführungsbeispiel mit einem Ende einer Koppelhebelfeder 24 verbunden, die an ihrem anderen Ende mit dem Hauptkörper 10 verbunden ist. Die Koppelhebelfeder 24 ist als Zugfeder ausgeführt und wird dann gedehnt, wenn der Steuerungskörper 30 in der entriegelten Stellung ist, sodass sie eine Federkraft erzeugt. Beispielsweise ist die linke Koppelhebelfeder 24 in Figur 2 gedehnt und drängt den mit ihr verbundenen linken Koppelhebel 22 in Figur 2 nach unten. Da eine Drehung des Steuerungskörpers 30 zu der verriegelten Stellung (Drehung nach links um die Drehachse Z in Figur 2) einer Bewegung des Koppelhebels 22 nach unten entspricht, drängt demgemäß die Federkraft der Koppelhebelfeder 24 des linken Koppelhebels 22 den Steuerungskörper 30 in Richtung der verriegelten Stellung. Dadurch wird gewährleistet, dass der Steuerungskörper 30 ohne Krafteinwirkung durch den Benutzer zu der verriegelten Position gedrängt wird. Demgemäß wird der Steuerungskörper 30 bei Loslassen des Handgriffs 40 zu der verriegelten Stellung gedrängt, wodurch die Sicherheit verbessert wird. Zudem wird die Handhabung weiter vereinfacht, da keine Kraft zum Verriegeln aufgewendet werden muss.

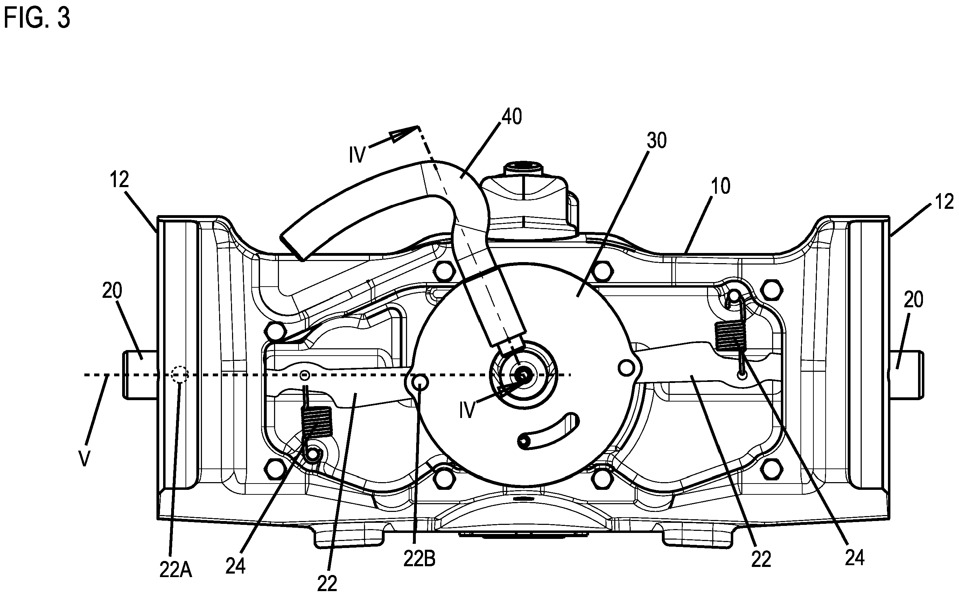

Eine Totpunktstellung des Steuerungskörpers 30 ist als eine Stellung des Steuerungskörpers 30 definiert, bei der ein Abstand zwischen einem Verriegelungsbolzen 20 und der Drehachse Z maximal ist. In Figur 3 ist eine Vorderansicht des Sperrmechanismus 1 in der verriegelten Stellung dargestellt. In einer derartigen Ansicht entspricht die Totpunktstellung ferner einer Stellung des Steuerungskörpers 30, bei welcher ein rechter (mit Bezug auf den Steuerungskörper 30 innerer) Kopplungspunkt 22B eines Koppelhebels 22 auf einer Verbindungslinie V liegt, die den linken (mit Bezug auf den Steuerungskörper 30 äußeren) Kopplungspunkt 22A des gleichen Koppelhebels 22 mit der Drehachse Z des Steuerungskörpers 30 verbindet. Diese Verbindungslinie V ist in Figur 3 als gestrichelte Linie eingezeichnet und stimmt bei dem Ausführungsbeispiel mit der Bolzenlängsachse Y überein. Jedoch ist der Figur 3 zu entnehmen, dass bei dem Ausführungsbeispiel die Kopplungspunkte an dem Steuerungskörper 30 nicht auf der Verbindungslinie V liegen, sondern der rechte Kopplungspunkt 22B des linken Koppelhebels 22 unterhalb der Verbindungslinie V befindlich ist. In der entriegelten Stellung hingegen liegt derselbe Kopplungspunkt oberhalb der Verbindungslinie V. Somit liegt die Totpunktstellung bei dem Ausführungsbeispiel zwischen der entriegelten Stellung und der verriegelten Stellung. Durch diesen Aufbau drängen Kräfte, die auf den Verriegelungsbolzen 20 wirken, den Steuerungskörper 30 entweder zu der Totpunktstellung oder zu der verriegelten Stellung.

Da der Verriegelungsbolzen 20 bei dem Ausführungsbeispiel sowohl bei der Totpunktstellung als auch in der verriegelten Stellung in der Verriegelungsöffnung eingesetzt ist, können daher die auf den Verriegelungsbolzen 20 einwirkenden Kräfte nicht zu einer Drehung des Steuerungskörpers 30 bis zu der entriegelten Stellung führen. Demgemäß können die bei einer Fahrt auf die Verriegelungsbolzen 20 einwirkenden Kräfte kein Entriegeln verursachen. Somit wird die Zuverlässigkeit der Kraftaufnahme während der Fahrt verbessert, und ein unbeabsichtigtes Entriegeln ohne Betätigung des Handgriffs 40 wird vermieden.

Wie in der Schnittansicht von Figur 4 gezeigt ist, hat der Sperrmechanismus 1 bei dem Ausführungsbeispiel ferner eine Kulissennut 14, die in einer zu einer Seitenfläche des Steuerungskörpers 30 parallelen Ebene bereitgestellt ist, und einen Führungszapfen 42, der in die Kulissennut 14 eingreift und durch diese geführt wird. Bei dem Ausführungsbeispiel ist die Kulissennut 14 als Aussparung in dem Hauptkörper 10 und der Führungszapfen 42 als eingepresster Passbolzen an dem Handgriff 40 bereitgestellt, wodurch ein einfacher Aufbau ermöglicht wird. Jedoch ist auch ein Aufbau möglich, bei dem die Kulissennut 14 in dem Handgriff 40 und der Führungszapfen 42 an dem Hauptkörper 10 bereitgestellt ist.

Die Kulissennut 14 hat bei dem Ausführungsbeispiel einen ersten Abschnitt 14A, der sich radial erstreckt, sodass er in der verriegelten Stellung die Bewegung des Führungszapfens 42 von der Ausgangsposition zu der Freigabeposition des Handgriffs 40 führt. Ferner hat die Kulissennut 14 einen zweiten Abschnitt 14B, der sich kreisbogenförmig erstreckt und die Drehachse Z als Mittelpunkt hat, sodass er die Bewegung des Führungszapfens 42 von der Freigabeposition mit der Drehung des Steuerungskörpers 30 von dessen verriegelten Stellung zu dessen entriegelten Stellung führt. Dadurch wird die durch den Benutzer auszuführende Bewegung des Handgriffs 40 von der Ausgangsposition zu der Freigabeposition sowie die Bewegung des Steuerungskörpers 30 von der verriegelten Stellung zu der entriegelten Stellung auf vorgegebene Weise geführt, wodurch die Handhabung komfortabler und einfacher wird. Zudem kann der erste Abschnitt 14A der Kulissennut 14 eine Drehung des Steuerungskörpers 30 auch dann verhindern, wenn der Handgriff 40 seine Ausgangsposition verlassen hat, jedoch die Freigabeposition noch nicht erreicht hat. Dadurch wird ein unerwünschtes Freigeben des Steuerungskörpers 30 weniger wahrscheinlich, wodurch die Sicherheit verbessert wird.

Bei dem Ausführungsbeispiel hat die Kulissennut 14 ferner einen dritten Abschnitt 14C, der sich derart radial erstreckt, dass er in der entriegelten Stellung die Bewegung des Führungszapfens 42 von der Freigabeposition zu der Ausgangsposition des Handgriffs 40 führt. Durch diesen Aufbau kann der Steuerungskörper 30 auch in seiner entriegelten Stellung gesperrt werden, wodurch die Verstellung der Kugelkupplung ohne Betätigung des Handgriffs 40 ermöglicht wird und die Handhabung weiter verbessert wird.

Es sei darauf hingewiesen, dass der radiale bzw. kreisbogenförmige Verlauf der Abschnitte 14A, 14B, 14C der Kulissennut 14 dann vorliegt, wenn der Handgriff 40 entlang einer Achse verschieblich ist und sich diese Achse mit der Drehachse Z des Steuerungskörpers 30 kreuzt. Jedoch sind auch weitere Konfigurationen möglich, bei den die vorgenannte Achse die Drehachse Z nicht kreuzt, sondern beispielsweise windschief zu dieser angeordnet ist, oder der Handgriff 40 nicht entlang einer Achse, sondern entlang einer anderen Kurve verschieblich ist. In einem solchen Fall erstrecken sich die einzelnen Abschnitte 14A, 14B, 14C der Kulissennut 14 entlang anderer Führungslinien, die nicht immer gerade bzw. kreisbogenförmig sind, sondern derart gestaltet sind, dass sie die vorstehend beschriebene Führung zwischen Ausgangsposition und Freigabeposition sowie zwischen verriegelter Stellung und entriegelter Stellung führen können. Beispielsweise können die erforderlichen Führungslinien durch eine dem Fachmann geläufige Kinematikanalyse ermittelt werden, und zur Fertigung der Kulissennut 14 kann eine CNC-gesteuerte Fräsbearbeitung eingesetzt werden.

Offenbart wird ein Sperrmechanismus für eine Kugelkupplung, die an einem mit zwei Führungsnuten versehenen Fahrzeug anbringbar ist, wobei der Sperrmechanismus Folgendes aufweist: einen Hauptkörper mit zwei parallelen Führungsflächen, die entlang einer Verstellachse verschieblich zu sein; einen Verriegelungsbolzen, der entlang einer Bolzenlängsachse verschieblich ist, wobei der Verriegelungsbolzen in eine Verriegelungsöffnung einsetzbar ist, sodass er eine Relativbewegung in Richtung der Verstellachse zwischen der einen Führungsnut und der entsprechenden einen Führungsfläche verhindert; einen Steuerungskörper, der mit dem Verriegelungsbolzen gekoppelt ist, dass eine Drehung des Steuerungskörpers eine Verschiebung des Verriegelungsbolzens bewirkt; und einen Handgriff, der in einer zu einer Seitenfläche des Steuerungskörpers parallelen Ebene zwischen einer Ausgangsposition und einer Freigabeposition verschieblich ist; wobei der Steuerungskörper zwischen einer verriegelten Stellung, in der der Verriegelungsbolzen in der Verriegelungsöffnung eingesetzt ist, und einer entriegelten Stellung drehbar ist, in der der Verriegelungsbolzen nicht in der Verriegelungsöffnung eingesetzt ist.

### Industrielle Anwendbarkeit

Der vorstehend beschriebene Sperrmechanismus kommt bevorzugt in Personenkraftwagen und Lastkraftwagen zum Einsatz, die in Kombination mit einem Anhänger betrieben werden.

### Bezugszeichenliste

| | | |
|---|---|---|
| Verstellachse | | X |
| Bolzenlängsachse | | Y |
| Drehachse | | Z |
| Sperrmechanismus | | 1 |
| Hauptkörper | | 10 |
| Führungsfläche | | 12 |
| Kulissennut | | 14 |
| | erster Abschnitt | 14A |
| | zweiter Abschnitt | 14B |
| | dritter Abschnitt | 14C |
| Verriegelungsbolzen | | 20 |
| Koppelhebel | | 22 |
| | Kopplungspunkt | 22A, 22B |
| Koppelhebelfeder | | 24 |
| Steuerungskörper | | 30 |
| | Hülsenabschnitt | 30A |
| Handgriff | | 40 |
| | Anschlagfläche | 40A |
| | Anlagefläche | 40B |
| Führungszapfen | | 42 |
| Handgriffrückstellfeder | | 44 |
| Scheibe | | 46 |

## Patentansprüche

1. Sperrmechanismus für eine Kugelkupplung, die an einem mit zwei Führungsnuten versehenen Fahrzeug anbringbar ist, wobei der Sperrmechanismus Folgendes aufweist:
einen Hauptkörper (10) mit zwei parallelen Führungsflächen (12), die in die zwei parallelen Führungsnuten einsetzbar sind, um darin entlang einer Verstellachse (X) verschieblich zu sein;
einen Verriegelungsbolzen (20), der relativ zu dem Hauptkörper (10) entlang einer Bolzenlängsachse (Y) verschieblich ist, wobei der Verriegelungsbolzen (20) in eine Verriegelungsöffnung, die in der einen Führungsnut bereitgestellt ist, einsetzbar ist, sodass er eine Relativbewegung in Richtung der Verstellachse (X) zwischen der einen Führungsnut und der entsprechenden einen Führungsfläche (12) verhindert; und
einen Steuerungskörper (30), der um eine Drehachse (Z) drehbar ist und derart mit dem Verriegelungsbolzen (20) gekoppelt ist, dass eine Drehung des Steuerungskörpers (30) eine Verschiebung des Verriegelungsbolzens (20) bewirkt; wobei
der Steuerungskörper (30) zwischen einer verriegelten Stellung, in der der Verriegelungsbolzen (20) in der Verriegelungsöffnung eingesetzt ist, und einer entriegelten Stellung drehbar ist, in der der Verriegelungsbolzen (20) nicht in der Verriegelungsöffnung eingesetzt ist, wobei
ein Handgriff (40), der an dem Steuerungskörper (30) bereitgestellt ist, in einer zu einer Seitenfläche des Steuerungskörpers (30) parallelen Ebene zwischen einer Ausgangsposition und einer Freigabeposition verschieblich ist, **dadurch gekennzeichnet, dass**
der Handgriff (40) in der Ausgangsposition die Drehung des Steuerungskörpers (30) verhindert; und
der Handgriff (40) in der Freigabeposition die Drehung des Steuerungskörpers (30) ermöglicht.

2. Sperrmechanismus nach Anspruch 1, ferner mit
einer Handgriffrückstellfeder (44), die den Handgriff (40) durch eine Federkraft zu der Ausgangsposition drängt.

3. Sperrmechanismus nach einem der Ansprüche 1 oder 2, ferner mit
einer Kulissennut (14), die in einer zu einer Seitenfläche des Steuerungskörpers (30) parallelen Ebene bereitgestellt ist, und
einem Führungszapfen (42), der in die Kulissennut (14) eingreift und durch diese geführt wird;
wobei die Kulissennut (14)
einen ersten Abschnitt, der sich so erstreckt, dass er in der verriegelten Stellung die Bewegung des Führungszapfens (42) von der Ausgangsposition zu der Freigabeposition des Handgriffs (40) führt, und
einen zweiten Abschnitt hat, der die Bewegung des Führungszapfens (42) von der Freigabeposition mit der Drehung des Steuerungskörpers (30) von dessen verriegelten Stellung zu dessen entriegelten Stellung führt.

4. Sperrmechanismus nach Anspruch 3, wobei
sich der erste Abschnitt mit Bezug auf die Drehachse (Z) radial erstreckt, und
sich der zweite Abschnitt kreisbogenförmig erstreckt und die Drehachse (Z) als Mittelpunkt hat.

5. Sperrmechanismus nach Anspruch 3 oder 4, wobei die Kulissennut (14) ferner einen dritten Abschnitt hat, der sich so erstreckt, dass er in der entriegelten Stellung die Bewegung des Führungszapfens (42) von der Freigabeposition zu der Ausgangsposition des Handgriffs (40) führt.

6. Sperrmechanismus nach einem der Ansprüche 3 bis 5, wobei die Kulissennut (14) in dem Hauptkörper (10) bereitgestellt ist, und der Führungszapfen (42) an dem Handgriff (40) bereitgestellt ist.

7. Sperrmechanismus nach einem der Ansprüche 1 bis 6, ferner mit
einem weiteren Verriegelungsbolzen (20), der relativ zu dem Hauptkörper (10) entlang einer weiteren Bolzenlängsachse (Y) verschieblich ist, die eine zu der Verstellachse (X) senkrechten Achse ist, wobei der weitere Verriegelungsbolzen (20) in eine weitere Verriegelungsöffnung, die in der anderen Führungsnut bereitgestellt ist, einsetzbar ist, sodass er eine Relativbewegung in Richtung der Verstellachse (X) zwischen der anderen Führungsnut und der entsprechenden anderen Führungsfläche (12) verhindert; wobei
der Steuerungskörper (30) derart mit dem weiteren Verriegelungsbolzen (20) gekoppelt ist, dass eine Drehung des Steuerungskörpers (30) eine Verschiebung des weiteren Verriegelungsbolzens (20) bewirkt; und
der weitere Verriegelungsbolzen (20) in der verriegelten Stellung des Steuerungskörpers (30) in der Verriegelungsöffnung eingesetzt ist, und in der entriegelten Stellung des Steuerungskörpers (30) nicht in der Verriegelungsöffnung eingesetzt ist.

8. Sperrmechanismus nach einem der Ansprüche 1 bis 7, ferner mit
einem Koppelhebel (22), der die Drehung des Steuerungskörpers (30) in eine Verschiebung eines Verriegelungsbolzens (20) um die dazugehörige Bolzenlängsachse (Y) umwandelt, wobei
der Verriegelungsbolzen (20) durch den Koppelhebel (22) mit dem Steuerungskörper (30) verbunden ist.

9. Sperrmechanismus nach Anspruch 8, ferner mit
einer Koppelhebelfeder (24), die den Koppelhebel (22) mit dem Hauptkörper (10) verbindet und den Koppelhebel (22) in eine Richtung drängt, die einer Drehrichtung des Steuerungskörpers (30) zu der verriegelten Stellung entspricht.

10. Sperrmechanismus nach Anspruch 8 oder 9, wobei
eine Totpunktstellung als eine Stellung des Steuerungskörpers (30) definiert ist, bei der ein Abstand zwischen einem Verriegelungsbolzen (20) und der Drehachse (Z) maximal ist; und
die Totpunktstellung zwischen der entriegelten Stellung des Steuerungskörpers (30) und der verriegelten Stellung des Steuerungskörpers (30) liegt.

11. Sperrmechanismus nach einem der Ansprüche 1 bis 10, wobei die Drehachse (Z) senkrecht zu der Verstellachse (X) und zu einer Bolzenlängsachse (Y) angeordnet ist.

12. Sperrmechanismus nach einem der Ansprüche 1 bis 11, wobei der Hauptkörper (10) den Steuerungskörper (30) und den/die Verriegelungsbolzen (20) staubgeschützt unterbringt.

## Claims

1. Locking mechanism for a ball coupling which can be attached to a vehicle which is provided with two guide grooves, the locking mechanism having the following:
a main body (10) with two parallel guide faces (12) which can be inserted into the two parallel guide grooves, in order to be displaceable therein along an adjustment axis (X) ;
a locking pin (20) which can be displaced relative to the main body (10) along the pin longitudinal axis (Y), it being possible for the locking pin (20) to be inserted into a locking opening which is provided in the one guide groove, with the result that it prevents a relative movement in the direction of the adjustment axis (X) between the one guide groove and the corresponding one guide face (12); and
a control body (30) which can be rotated about a rotational axis (Z) and is coupled to the locking pin (20) in such a way that a rotation of the control body (30) brings about a displacement of the locking pin (20);
it being possible for the control body (30) to be rotated between a locked position, in which the locking pin (20) is inserted in the locking opening, and an unlocked position, in which the locking pin (20) is not inserted in the locking opening,
it being possible for a handle (40) which is provided on the control body (30) to be displaced between a starting position and a release position in a plane which is parallel to a side face of the control body (30),
**characterized in that**
the handle (40) prevents the rotation of the control body (30) in the starting position; and
the handle (40) makes the rotation of the control body (30) possible in the release position.

2. Locking mechanism according to Claim 1, with, furthermore,
a handle restoring spring (44) which pushes the handle (40) to the starting position by way of a spring force.

3. Locking mechanism according to either of Claims 1 or 2, with, furthermore,
a slotted guide groove (14) which is provided in a plane which is parallel to a side face of the control body (30), and
a guide pin (42) which engages into the slotted guide groove (14) and is guided by way of the latter;
the slotted guide groove (14) having
a first section which extends in such a way that, in the locked position, it guides the movement of the guide pin (42) from the starting position to the release position of the handle (40), and
a second section which guides the movement of the guide pin (42) from the release position by way of the rotation of the control body (30) from its locked position to its unlocked position.

4. Locking mechanism according to Claim 3,
the first section extending radially with reference to the rotational axis (Z), and
the second section extending in an arcuate manner and having the rotational axis (Z) as centre point.

5. Locking mechanism according to Claim 3 or 4, the slotted guide groove (14) having, furthermore, a third section which extends in such a way that, in the unlocked position, it guides the movement of the guide pin (42) from the release position to the starting position of the handle (40).

6. Locking mechanism according to one of Claims 3 to 5, the slotted guide groove (14) being provided in the main body (10), and the guide pin (42) being provided on the handle (40).

7. Locking mechanism according to one of Claims 1 to 6, with, furthermore,
a further locking pin (20) which can be displaced relative to the main body (10) along a further pin longitudinal axis (Y) which is an axis which is perpendicular with respect to the adjustment axis (X), it being possible for the further locking pin (20) to be inserted into a further locking opening which is provided in the other guide groove, with the result that it prevents a relative movement in the direction of the adjustment axis (X) between the other guide groove and the corresponding other guide face (12);
the control body (30) being coupled to the further locking pin (20) in such a way that a rotation of the control body (30) brings about a displacement of the further locking pin (20); and
the further locking pin (20) being inserted into the locking opening in the locked position of the control body (30), and not being inserted in the locking opening in the unlocked position of the control body (30).

8. Locking mechanism according to one of Claims 1 to 7, with, furthermore,
a coupling lever (22) which converts the rotation of the control body (30) into a displacement of the locking pin (20) about the associated pin longitudinal axis (Y), the locking pin (20) being connected by way of the coupling lever (22) to the control body (30).

9. Locking mechanism according to Claim 8, with, furthermore,
a coupling lever spring (24) which connects the coupling lever (22) to the main body, and pushes the coupling lever (22) in a direction which corresponds to a rotational direction of the control body (30) to the locked position.

10. Locking mechanism according to Claim 8 or 9,
a dead centre position being defined as a position of the control body (30), in the case of which position a spacing between the locking pin (20) and the rotational axis (Z) is at a maximum; and
the dead centre position lying between the unlocked position of the control body (30) and the locked position of the control body (30).

11. Locking mechanism according to one of Claims 1 to 10, the rotational axis (Z) being arranged perpendicularly with respect to the adjustment axis (X) and with respect to a pin longitudinal axis (Y).

12. Locking mechanism according to one of Claims 1 to 11, the main body (10) accommodating the control body (30) and the locking pin or pins (20) in a manner which is protected against dust.

## Revendications

1. Mécanisme de verrouillage pour un accouplement à boule qui peut être attaché à un véhicule muni de deux rainures de guidage, le mécanisme de verrouillage présentant :
un corps principal (10) doté de deux surfaces de guidage parallèles (12) qui peuvent être insérées dans les deux rainures de guidage parallèles afin d'être mobiles dans celles-ci le long d'un axe de réglage (X) ;
un boulon de verrouillage (20) qui est mobile par rapport au corps principal (10) le long d'un axe longitudinal de boulon (Y), le boulon de verrouillage (20) pouvant être inséré dans une ouverture de verrouillage qui est prévue dans ladite une rainure de guidage de sorte qu'il empêche un mouvement relatif en direction de l'axe de réglage (X) entre ladite une rainure de guidage et ladite une surface de guidage (12) correspondante ; et
un corps de commande (30) qui peut tourner sur un axe de rotation (Z) et est accouplé au boulon de verrouillage (20) de telle sorte qu'une rotation du corps de commande (30) provoque un décalage du boulon de verrouillage (20) ; dans lequel
le corps de commande (30) peut tourner entre une position verrouillée dans laquelle le boulon de verrouillage (20) est inséré dans l'ouverture de verrouillage et une position déverrouillée dans laquelle le boulon de verrouillage (20) n'est pas inséré dans l'ouverture de verrouillage, dans lequel
une manette (40) qui est prévue sur le corps de commande (30) et est mobile dans un plan parallèle à une surface latérale du corps de commande (30) entre une position de départ et une position de déblocage,
**caractérisé en ce que**
dans la position de départ, la manette (40) empêche la rotation du corps de commande (30) ; et
dans la position de déblocage, la manette (40) autorise la rotation du corps de commande (30).

2. Mécanisme de verrouillage selon la revendication 1, comprenant en outre
un ressort de rappel de manette (44) qui pousse la manette (40) vers la position de départ par une force de ressort.

3. Mécanisme de verrouillage selon l'une quelconque des revendications 1 et 2, comprenant en outre
une rainure de coulisse (14) qui est prévue dans un plan parallèle à une surface latérale du corps de commande (30), et
un tenon de guidage (42) qui vient en prise dans la rainure de coulisse (14) et est guidé par celle-ci ;
la rainure de coulisse (14) présentant
une première partie qui s'étend de telle sorte que dans la position verrouillée, il guide le mouvement du tenon de guidage (42) de la position de départ à la position de déblocage de la manette (40), et
une deuxième partie qui guide le mouvement du tenon de guidage (42) de la position de déblocage par la rotation du corps de commande (30) de la position verrouillée de celui-ci à la position déverrouillée de celui-ci.

4. Mécanisme de verrouillage selon la revendication 3, dans lequel
la première partie s'étend radialement par rapport à l'axe de rotation (Z), et
la deuxième partie s'étend en forme d'arc de cercle et présente l'axe de rotation (Z) comme centre.

5. Mécanisme de verrouillage selon la revendication 3 ou 4, dans lequel la rainure de coulisse (14) présente en outre une troisième partie qui s'étend de telle sorte que dans la position déverrouillée, il guide le mouvement du tenon de guidage (42) de la position de déblocage à la position de départ de la manette (40).

6. Mécanisme de verrouillage selon l'une quelconque des revendications 3 à 5, dans lequel
la rainure de coulisse (14) est prévue dans le corps principal (10), et
le tenon de guidage (42) est prévu sur la manette (40) .

7. Mécanisme de verrouillage selon l'une quelconque des revendications 1 à 6, comprenant en outre
un autre boulon de verrouillage (20) qui est par rapport au corps principal (10) mobile le long d'un autre axe longitudinal de boulon (Y) qui est un axe perpendiculaire à l'axe de réglage (X), l'autre boulon de verrouillage (20) pouvant être inséré dans une autre ouverture de verrouillage qui est prévue dans l'autre rainure de guidage de sorte qu'il empêche un mouvement relatif en direction de l'axe de réglage (X) entre l'autre rainure de guidage et l'autre surface de guidage (12) correspondante ; dans lequel
le corps de commande (30) est accouplé à l'autre boulon de verrouillage (20) de telle sorte qu'une rotation du corps de commande (30) provoque un décalage de l'autre boulon de verrouillages (20) ; et
dans la position verrouillée du corps de commande (30), l'autre boulon de verrouillage (20) est inséré dans l'ouverture de verrouillage, et dans la position déverrouillée du corps de commande (30), il n'est pas inséré dans l'ouverture de verrouillage.

8. Mécanisme de verrouillage selon l'une quelconque des revendications 1 à 7, comprenant en outre
un levier d'accouplement (22) qui transforme la rotation du corps de commande (30) en un décalage d'un boulon de verrouillage (20) autour de l'axe longitudinal de boulon (Y) associé, dans lequel
le boulon de verrouillage (20) est relié au corps de commande (30) par le levier d'accouplement (22).

9. Mécanisme de verrouillage selon la revendication 8, comprenant en outre
un ressort de levier d'accouplement (24) qui relie le levier d'accouplement (22) au corps principal (10) et pousse le levier d'accouplement (22) vers la position verrouillée dans une direction qui correspond à un sens de rotation du corps de commande (30).

10. Mécanisme de verrouillage selon la revendication 8 ou 9, dans lequel
une position de point mort est définie comme une position du corps de commande (30) dans laquelle une distance entre un boulon de verrouillage (20) et l'axe de rotation (Z) est maximale ; et
la position de point mort se trouve entre la position déverrouillée du corps de commande (30) et la position verrouillée du corps de commande (30).

11. Mécanisme de verrouillage selon l'une quelconque des revendications 1 à 10, dans lequel l'axe de rotation (Z) est disposé perpendiculairement à l'axe de réglage (X) et à un axe longitudinal de boulon (Y).

12. Mécanisme de verrouillage selon l'une quelconque des revendications 1 à 11, dans lequel le corps principal (10) loge le corps de commande (30) et le(s) boulon(s) de verrouillage (20) à l'abri de la poussière.
